# EUROPEAN PATENT SPECIFICATION

(11) **EP 3 079 509 B1**
(45) Date of publication and mention of the grant of the patent: **12.06.2019**
(21) Application number: 14812205.4
(22) Date of filing: 10.12.2014
(51) Int. Cl.: A24D 3/04

(54) **A METHOD AND APPARATUS FOR INSERTING ELONGATE ELEMENTS INTO A SLEEVE**
VERFAHREN UND VORRICHTUNG ZUM EINSETZEN VON LANGEN ELEMENTEN IN EINE HÜLSE
PROCÉDÉ ET APPAREIL POUR L'INSERTION D'ÉLÉMENTS ALLONGÉS DANS UN MANCHON

(30) Priority: 11.12.2013 GB 201321920
(43) Date of publication of application: 19.10.2016
(73) Proprietor: British American Tobacco (Investments) Limited, London WC2R 3LA (GB)
(72) Inventor: PENROSE, Graham, Milton Keynes MK9 1AU (GB); MALTHOUSE, Michael, Milton Keynes MK9 1AU (GB); STEPHENSON, Darren, Milton Keynes MK9 1AU (GB); FULCHER, Gary, Milton Keynes MK9 1AU (GB)
(74) Representative: Grey, Ian Michael
(86) International application number: PCT/EP2014/077232
(87) International publication number: WO 2015/086681

(56) References cited:
- WO-A1-2013/004994
- WO-A1-2013/175242
- US-A- 3 207 212
- US-A- 3 984 000

## Description

### Technical Field

The invention relates to a method and an apparatus for inserting elongate elements into a sleeve in a continuous manufacturing process. The elongate elements are particularly but not exclusively rod shaped elements, such as filter units for smoking articles.

### Background

The Applicant's co-pending GB patent application GB1209261.5 (published as WO2013/175242) discloses a sleeve for holding a plurality of elongate elements, such as filter units for smoking articles, in end-to-end relationship. The sleeve at least partially encloses the filter units and the filter units may have a diameter which is at least slightly greater than the diameter of the sleeve when no filter elements are received therein, so that when filter elements are received in the sleeve, the sleeve is deformed by the filter elements against a bias provided by the resilience of the material from which the sleeve is made. Thus, the filter elements are held in position within the sleeve and do not fall out of the sleeve without the application of pressure being applied thereto. An opening extends along the length of the sleeve to allow a user to contact a filter element held therein so that pressure may be applied to the filter element that is sufficient to overcome the bias provided by the resilience of the material and push the filter units out of the open end of the sleeve using a finger.

### Summary

In accordance with embodiments of the invention, there is provided an insertion method that comprises: continuously feeding the sleeve over a member that deforms a region of the sleeve to enlarge the opening and, simultaneously feeding a continuous length of elongate elements positioned in end-to-end relationship into the sleeve through the enlarged opening in said region so that the sleeve closes around the elongate elements when it travels beyond said member.

Said member that deforms a region of the sleeve to enlarge the opening may comprise an arcuately-shaped or cylindrical former and the method includes passing the sleeve around a portion of said former so that it follows an arcuate path to thereby cause the opening in the sleeve to widen.

The method may include passing the sleeve around the former with its opening facing radially away from the longitudinal axis of the former so that the opening in the sleeve is widened.

The method may further include the step of maintaining the deformation in a region of the sleeve beyond a point at which it stops following an arcuate path around the former.

The step of maintaining deformation in a region of the sleeve may comprise passing it between a support plate and a sleeve retaining plate to prevent release of the deformation and return of the region of the sleeve to its original non-deformed configuration.

The method may include the step of feeding the sleeve and the elongate elements contained within the sleeve through a garniture, positioned downstream of said mechanism, to close the sleeve around the elongate elements.

The method may include the step of releasing the sleeve so that it closes around the elongate elements contained within the sleeve due to its own resilience downstream of said member.

The method may comprise the step of applying heat to the sleeve to soften it prior to deformation and/or to facilitate closing of the sleeve around the elongate elements.

The step of feeding of elongate elements may include arranging a continuous length of elongate elements in end-to-end relation so that there are no spaces between said elements, and pushing said continuous length into the opened sleeve.

The disclosure further concerns a method of manufacturing a continuous resilient flexible sleeve to hold a plurality of elongate elements positioned in end-to-end relationship, the continuous resilient flexible sleeve comprising a wall that extends around and partially encloses said elongate elements to hold them in position within the sleeve, the wall having a longitudinally extending opening configured to enable a user to make contact with elongate elements held by said sleeve through said opening to push them along the sleeve towards, and out of, one end of the sleeve, the method comprising the step of drawing a web of material through a moulding die configured to deform said web into the sleeve.

The method may further comprise the step of heating said moulding die.

The method may further comprise the step of cooling the moulded continuous sleeve prior to inserting elongate elements into said sleeve.

In accordance with embodiments of the invention, there is also provided an apparatus for inserting elongate elements positioned in end-to-end relationship into a continuous resilient flexible sleeve comprising a wall that extends around and partially encloses said elongate elements to hold them in position within the sleeve, the wall having a longitudinally extending opening configured to enable a user to make contact with elongate elements held by said sleeve through said opening to push them along the sleeve towards, and out of, one end of the sleeve, the insertion apparatus comprising: a member configured to deform a region of the sleeve as the sleeve is fed over the member, to enlarge the opening as said sleeve passes through said apparatus, and a conveyor to simultaneously feed a continuous length of elongate elements positioned in end-to-end relation into the sleeve through the enlarged opening in said region so that the sleeve closes around the elongate elements when it travels beyond said apparatus.

The member that deforms a region of the sleeve to enlarge the opening may comprise a cylindrical former around at least a portion of which said sleeve is passed so that it follows an arcuate path to thereby cause the opening in the sleeve to widen.

The cylindrical former may be disposed such that the sleeve passes around the former with its opening facing radially away from the longitudinal axis of the former so that the opening in the sleeve is widened.

The apparatus may further comprise a support plate and a retaining plate positioned such that the sleeve passes between the support plate and the retaining plate as the sleeve leaves said member to maintain the deformation of the sleeve and prevent the region of the sleeve returning to its original non-deformed configuration.

The apparatus may further comprise a garniture positioned downstream of said apparatus, through which the sleeve and the elongate elements contained within the sleeve are fed to close the sleeve around the elongate elements.

The support plate and retaining plate may be configured to release the deformed region of the sleeve so that is closes around the elongate elements contained within the sleeve due to its own resilience.

The apparatus may further comprise a heater disposed to heat the sleeve to soften it prior to deformation and/or to facilitate closing of the sleeve around the elongate elements.

The present disclosure further concerns an apparatus for manufacturing a continuous resilient flexible sleeve to hold a plurality of elongate elements positioned in end-to-end relationship, the continuous resilient flexible sleeve comprising a wall that extends around and partially encloses said elongate elements to hold them in position within the sleeve, the wall having a longitudinally extending opening configured to enable a user to make contact with elongate elements held by said sleeve through said opening to push them along the sleeve towards, and out of, one end of the sleeve, the apparatus comprising a moulding die through which a web of material is drawn to deform said web of material to form the sleeve.

The moulding die may comprise a tubular pathway through which the web of material is drawn to form the sleeve, said tubular pathway also comprising a tapered inlet.

The moulding die may comprise a first portion having a first recess and a second portion having a second recess, the second portion being moveable relative to the first portion such that when the moulding die is in operation the second portion is in contact with the first portion and the first and second recesses are aligned to create said tubular pathway.

The moulding die may further comprise an arm extending from the first or second portion to support a moulding pin so that said pin extends at least partially into the tubular pathway.

The moulding die may comprise a steam inlet for receiving steam and at least one steam outlet for releasing said steam towards the web of material, as it is drawn through the moulding die.

The at least one steam outlet may be disposed in the first recess or in second recess.

The moulding pin may comprise at least one steam outlet.

The apparatus may further comprise a cooling unit disposed downstream of the moulding die to cool the moulded sleeve prior to inserting elongate elements into said sleeve.

The cooling unit may comprise a funnel shaped chamber, through which the sleeve passes from the narrow end to the larger end, the chamber also comprising an air inlet for receiving compressed air to cool the sleeve.

The apparatus may further comprise a cutter to cut the web of material prior to that material being drawn through said moulding die to form said sleeve.

The cutter may be configured to cut an edge profile onto the web of material.

The elongate elements may be filter units for a smoking article.

The present disclosure further concerns a resilient flexible sleeve containing elongate elements positioned in end-to-end relationship, the sleeve comprising a wall that extends around and partially encloses said elongate elements to hold them in position within the sleeve when inserted therein, the wall having a longitudinally extending opening configured to enable a user to make contact with elongate elements held by said sleeve through said opening to push them along the sleeve towards, and out of, one end of the sleeve, the sleeve being manufactured according to the method of the invention and and/or the elongate elements being inserted into the sleeve using the method of insertion according to the invention.

### Brief Description of the Drawings

Embodiments of the invention will now be described, by way of example only, with reference to the accompanying drawings in which:
Figure 1 shows a sleeve for a holding a plurality of elongate elements;
Figures 2 shows the sleeve of Figure 1 with a plurality of elongate elements, such as filter units for a smoking article, being held in the sleeve in end-to-end relationship;
Figure 3 shows a process diagram for an embodiment of the method for manufacturing a sleeve holding elongate elements;
Figure 4 shows a schematic process diagram of an embodiment of the apparatus for manufacturing a sleeve for elongate elements;
Figure 5 shows the preparation cutter assembly of the apparatus of Figure 4;
Figures 6a to 6c show the sleeve forming apparatus and cooling assembly of the apparatus of Figure 4;
Figures 7a and 7b show the sleeve opening mechanism of the apparatus of Figure 4;
Figure 8 shows the sleeve opening mechanism, collator and combining apparatus of the apparatus of Figure 4;
Figures 9a to 9d show different embodiments of the sleeve retaining assembly of the apparatus of Figure 4;
Figure 10 shows an example of a garniture of the apparatus of Figure 4; and,
Figure 11 shows a cutting configuration for separating the continuous sleeve and elongate elements into the individual products of Figure 2.

### Detailed Description

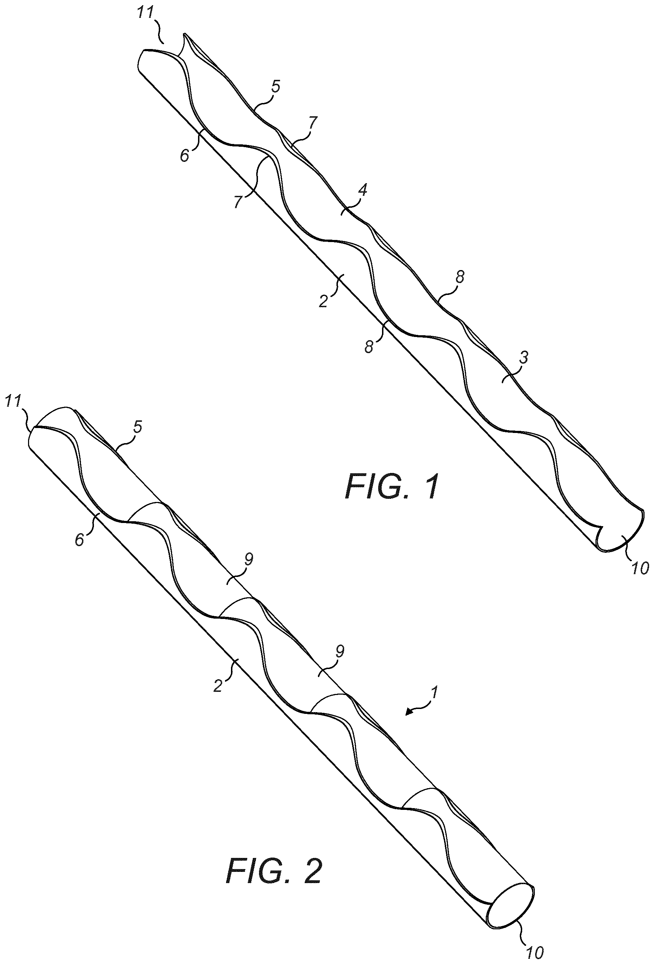

Figures 1 and 2 show a sleeve 1 holding a plurality of filter units 9, as disclosed in the Applicant's co-pending GB patent application number GB1209261.5, published as WO2013/175242. Figure 1 shows the sleeve without any elongate elements and Figure 2 shows the sleeve 1 holding a plurality of elongate elements 9 in end-to-end relationship.

As shown in Figure 2, filter units 9 are received within the sleeve 1, in a central space 3 (see Figure 1), in end-to-end relationship. A wall 2 extends around and partially encloses the elongate elements 9 to hold them in position within the sleeve 1. An opening 4 is formed in the wall 2 and allows a user to contact the filter units 9 within the sleeve 1 and remove them by pushing the filter units 9 towards the open ends 10, 11 of the sleeve. The wall 2 of the sleeve 1 extends around more than half of the circumference of the filter units 9 so that the filter units are retained within the sleeve 1 and can only be removed by pushing the filter units 9 towards and out of the open ends 10, 11. The sleeve 1 is preferably formed from a resiliently deformable material and the filter units have a diameter which is slightly greater than the diameter of the empty sleeve, so that the sleeve is deformed by the filter elements when the filter elements are received therein. The filter elements are then held snugly within the sleeve due to the resilience of the material from which the sleeve is made. This prevents the filter elements from sliding out of the ends of the sleeve in the absence of any pressure being applied thereto by a user.

As shown in Figures 1 and 2, the edges 5, 6 of the opening may have a profile, such as a sinusoidal wave with peaks 7 and troughs 8. The pitch of the wave (distance between two peaks 7) may equal the length of a filter unit 9 to be received in the sleeve 1. Alternatively, the wave may take various forms, such as a saw-tooth profile, square waves or the peaks and troughs of the waves might not be aligned with each other. Alternatively, the edges 5, 6 of the sleeve 1 may be straight and parallel to each other or straight and tapered so that the size of the opening 4 is not constant along the length of a sleeve 1.

The sleeve described with reference to Figures 1 and 2 can be made from a polymer material such that the sleeve has sufficient rigidity to prevent the filter units 9 falling out of the sleeve 1 via the opening 4 but resilient enough to allow the filter units 9 to be slid along the sleeve 1 in response to the application of pressure thereto with a finger or thumb. The sleeve 1 may be made from a transparent or translucent material such that a user can see the quantity, colour and position of the filter units 9 within the sleeve 1.

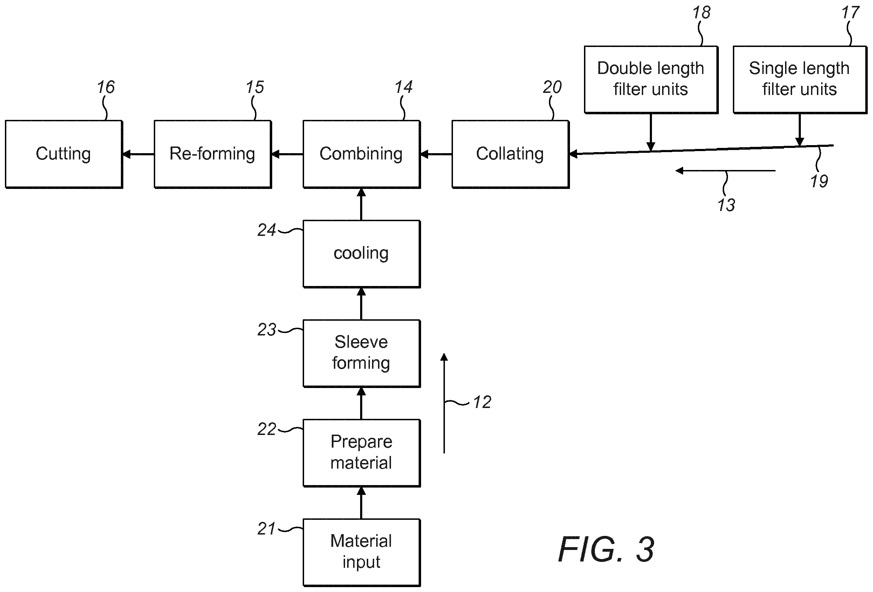

Figure 3 shows a schematic method diagram for the manufacturing system for producing a sleeve 1 holding filter units 9, as described above with reference to Figure 2.

The method includes two parallel processes; the first process 13 prepares the filter units and the second process 12 forms and prepares a continuous sleeve. These first and second processes 12, 13 both supply a combining unit 14 which inserts the filter units into the continuous sleeve. An optional sleeve re-forming process 15 and a cutting process 16 complete the manufacturing method and the continuous sleeve is cut into the required length sleeve products, as shown in Figure 2.

The first process 13 receives a combination of single length filter units 17 and double length filter units 18 which are fed onto a conveyor 19 in a pre-determined end-to-end arrangement; double length inserts 18 are arranged on the conveyor 19, with each being separated by a plurality of single length inserts 17 in a repeating pattern, for reasons which will become apparent later. The filter units 17, 18 are then collated 20 so that they are bunched together with no space between the filter units.

The second process 12 receives material from an input 21, such as a reel or from a previous process. The material moves along the second process 12 as a web of material being controlled by rollers and other similar web handling apparatus and the material is formed into a continuous sleeve.

The material may initially pass through an optional preparation process 22 which may cut the material to add an edge profile, or other feature, prior to the sleeve forming process 23. Alternatively, the preparation process may involve trimming the material to alter the width of the web of material.

The web of material is drawn through the sleeve forming process 23 which moulds the material into a continuous sleeve with a continuous opening along one side, similar the sleeve shown in Figure 1 but formed in a continuous manner. During the sleeve forming process 23 the flat material is wrapped into a substantially tubular form, with a space left between the edges of the material so a continuous opening is formed along one side of the sleeve, between the edges. Therefore, any edge profile added to the material during the material preparation process 22 will create the edge profile of the opening (for example the wave profile on the edges 5, 6 of the opening 4 - see Figures 1 and 2).

The sleeve forming process 23 may include a heater or a means for heating the material to assist the moulding of the material into a sleeve and a subsequent cooling process 24 may be included to cool the newly formed continuous sleeve before the sleeve is provided to the combining process 14. Heating the material will increase the plasticity of the material, allowing it to be more easily formed into the continuous sleeve, and the sleeve may be cooled after the forming process 23 to return the material to an elastic state. Any residual heat that remains in the continuous sleeve after it has been formed may cause the sleeve to be plastically deformed by subsequent processes, disturbing the moulded shape formed by the sleeve forming process 23.

The combining process 14 enlarges the continuous opening along the sleeve and inserts the collated filter rods into the sleeve through the continuous opening, as explained in more detail later.

After the inserts have been inserted into the sleeve, the sleeve is re-formed 15 to the shape defined by the sleeve forming process 23, but with filter units within the sleeve. The sleeve may return to its non-deformed, moulded shape because of the resilient or elastic properties of the sleeve material. Alternatively, a re-forming mechanism may actively re-form the sleeve.

A final cutting process 16 separates the continuous sleeve into the individual sleeve products shown in Figure 2. Each sleeve may contain, for example, 8 filter inserts of the same length. To achieve this, the cutting process 16, which may include a rotary blade or guillotine, cuts the continuous sleeve in a position corresponding to the middle of each double length filter rod unit 18, thus separating the continuous sleeve into equal size products and cutting the double length filter rod units 18 to the desired single length, which thereby form the end filter units of each sleeve product.

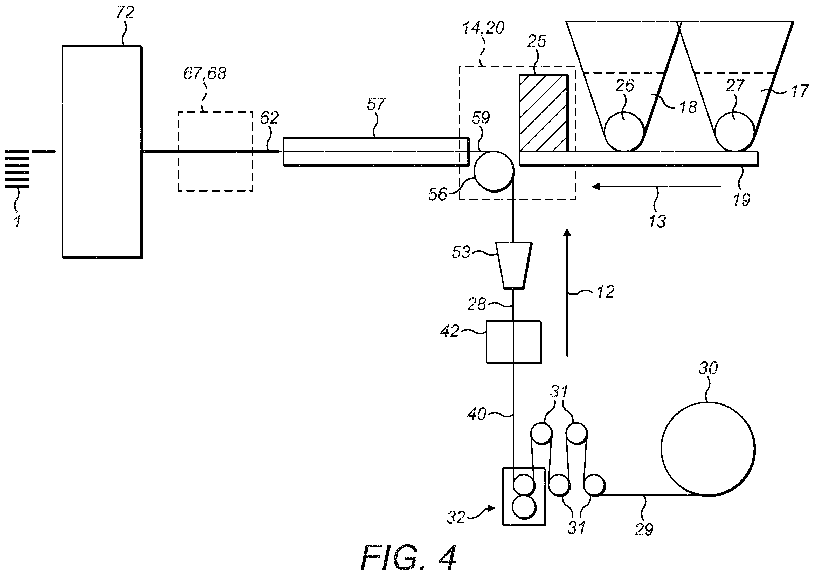

Figure 4 shows a schematic diagram of an apparatus for manufacturing the sleeves with elongate elements as shown in Figure 2. The apparatus performs the method described with reference to Figure 3.

Generally, as previously explained, the manufacturing apparatus includes two parallel processes; a first process 13 which collates filter units and a second process 12 (see Figure 3) which forms a continuous sleeve. The first and second processes meet so that the filter units are inserted into the continuous sleeve which is then cut to produce the sleeve products 1 (see Figure 4).

The first process 13 (see also Figure 3) comprises a conveyor 19 which delivers single and double length filter units 17, 18 that have been arranged in the manner previously described. The conveyor 19 receives single length filter units 17 from a first feed mechanism 27 and double length filter units 18 from a second feed mechanism 26. The first and second feed mechanisms 27, 26 may be hoppers that contain the filter units 17, 18 and a mechanical gate on each hopper may deposit the filter units 17, 18 onto the conveyor 19 in the correct orientation and at the correct time, so that the filter units 17, 18 are arranged in end-to-end arrangement as required for producing the sleeve 1 with filter units, as shown in detail in Figure 2.

The conveyor 19 delivers the arranged filter units 17, 18 to a collator 20, which is configured to bunch the filter units together, with no spaces between them, and to insert the collation into the continuous sleeve 28 which has been formed on the second process 12.

The second process 12, which produces a continuous moulded sleeve 28 from a material 29 being fed from a reel 30, is partly a web handling system for handling the web of material 29, 40 before it enters the sleeve forming process. Figure 4 shows the web of material 29 for the sleeve being provided from a reel 30. It will be appreciated that instead of a reel 30 to provide the material 29, the material may be fed directly into the second process line 12 from another machine, such as an extrusion forming machine that produces the web of material. The material 29 from the reel 30 is a web with fixed width and can be controlled using rollers 31 which move to control the tension, speed and/or the position of the material 29 as it travels through the subsequent apparatus for forming a continuous sleeve and inserting the filter units.

As previously explained, the second process line 12 may include a material preparation process 22 (see Figure 3) which alters the material prior to the material entering the moulding process. For example, the process may include a preparation cutter assembly 32 which cuts a profile into the material 29. For some embodiments of the sleeve, such as that shown in Figures 1 and 2, it is necessary to add a profile to the edges of the material to form the profiled edges 5, 6 of the opening 4 once the sleeve is formed (see Figure 1). The material preparation cutter assembly 32 may be omitted if no profile edge is required - i.e. if the opening 4 (see Figure 3) along the sleeve has straight parallel edges. Alternatively, a similar material preparation process may be used to change the width of the reel of material and therefore adjust the size of the opening along the sleeve, as will become apparent.

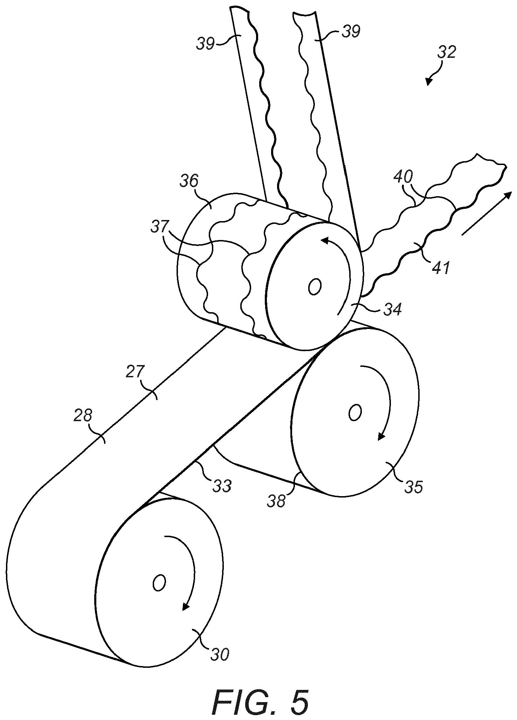

Figure 5 shows a preparation cutter assembly 32 which can be used to cut the edges 33 of the material 29 as it is unwound from the reel 30, or from a previous process, before it is moulded into a continuous sleeve. The material 29 passes through the preparation cutter assembly 32 which comprises a cutter roller 34 and an anvil roller 35 that act against each other with the material 29 travelling between them as they rotate in opposite directions. The outer circumferential surface 36 of the cutter roller 34 has two blades 37 protruding radially outwards that act against the outer circumferential surface 38 of the anvil roller 35 to shear cut the material 29 as it passes between the two rollers 34, 35. In the example shown, the blades 37 cut the material 29 to remove the edge portions 39 and the shape of the blades 37 defines the profile of the cut edges 40 of the cut material 41 and therefore the opening 4 (see Figure 1) of the sleeve. The waste material - the two edge strips 39 which have been removed - may be wound onto a separate collection roller or fed directly into a chute for disposal or recycling.

In an alternative arrangement, the material preparation process using the preparation cutter assembly may be carried out separately to the second process line 12 (see Figure 4). In this case, a separate machine would prepare the cut material 41 which is then rewound, onto a reel, which can be transferred to the sleeve forming apparatus to feed the cut material 41 directly into the sleeve forming apparatus.

The cutter and anvil rollers 34, 35 of the preparation cutter assembly 32 may be changeable to alter the configuration of the blades 37 and therefore change the form of the profiled edges 40 of the formed sleeves. The cutter and anvil rollers 34, 35 may also be able to move apart on the machine, for example by means of a pneumatic actuator (not shown). This will allow the preparation cutting process 22 to be selectively disabled, by allowing the material 29 to pass between the rollers 34, 35 without being cut. This may be appropriate if a single apparatus were to be used to produce different embodiments of sleeves with no edge profile required on the opening of the sleeve.

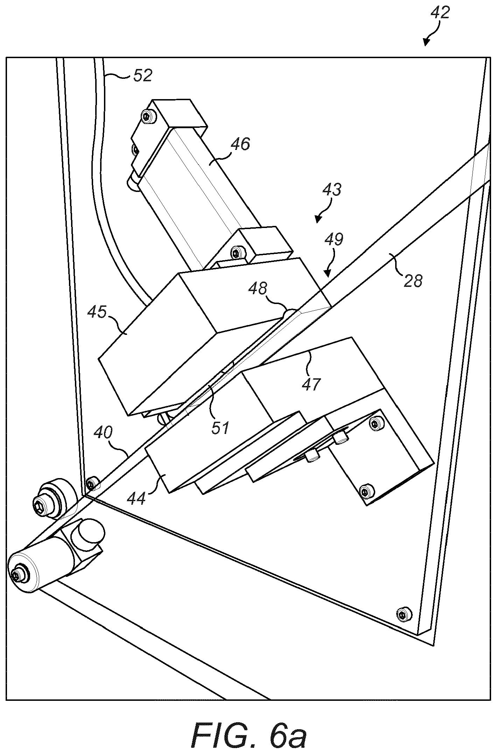

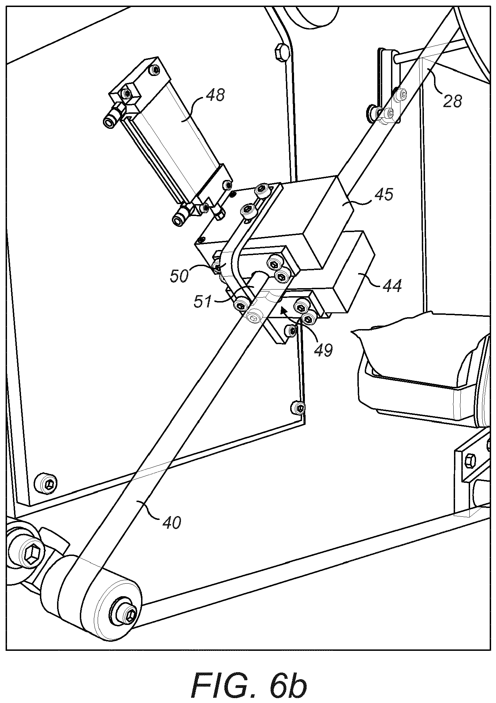

Referring again to Figure 4, the cut material 41 then enters the sleeve moulding apparatus 42, which moulds the material into a continuous sleeve with a continuous opening along one side and is shown in more detail in Figures 6a and 6b. A die 43 moulds the flat, cut material 41 into a substantially tubular continuous sleeve 28 with a continuous opening along one side.

The die 43 shown in Figures 6a and 6b is a steam die that heats the cut material 41 using steam and the internal shape of the die, through which the material 41 is drawn, moulds the heated material into a substantially tubular sleeve 28 with an open side. The die 43 is formed of first and second parts 44, 45; the first part 44 is in a fixed position and the second part 45 can be moved towards and away from the fixed first part 44 by means of a pneumatic actuator 46. The first and second parts 44, 45 of the steam die 43 each have a recess 47, 48 and those recesses are aligned when the die 43 is closed to create a tapered tubular pathway 49 through which the material 41 is drawn. The tubular pathway 49 has a tapered inlet which leads into tubular portion.

Furthermore, the second part 45 of the steam die 43 has an arm 50 (see Figure 6b) that extends around to the inlet side of the recess 47 in the second part 45 and supports a tapered moulding pin 51 that extends into the tubular pathway 49 formed by the recesses 47, 48 when the first and second parts 44, 45 of the steam die 43 are closed together. The pin 51 is shaped to match the form of the tapered tubular pathway 49, with a tapered portion that is aligned with the tapered inlet of the pathway 49 and a cylindrical portion that extends through the tubular portion of the pathway 49. The pin 51 sits concentrically within the tubular pathway 49 so that it does not contact the edges of the recesses 47, 48. In this way, the material is drawn through the annular space between the pin 51 and the edges of the recesses 47, 48 and this space defines the tubular shape of the continuous sleeve 28.

A steam conditioning unit (not shown) supplies steam to the die 43 via an inlet pipe 52 and the recesses 47, 48 and/or the pin 51 have at least one outlet aperture (not shown) that releases steam into at least a part of the tapered tubular pathway 49, directly onto the material 41 as it is drawn through the die 43. The steam acts to heat the material 41 which causes it to more readily plastically deform into the shape defined between the tubular pathway 49 and the moulding pin 51. The material 41 deforms into a substantially tubular shape as it is drawn through the die 43 so that the edges 40 (see Figure 5) of the material 41 are folded towards each other but do not make contact, leaving a continuous opening along one side of a continuous moulded sleeve 28. The edges of the opening are the same as the edges which were cut by the material preparation cutter assembly 32 (see Figure 5) and therefore may have a profile, as shown in Figures 1 and 2.

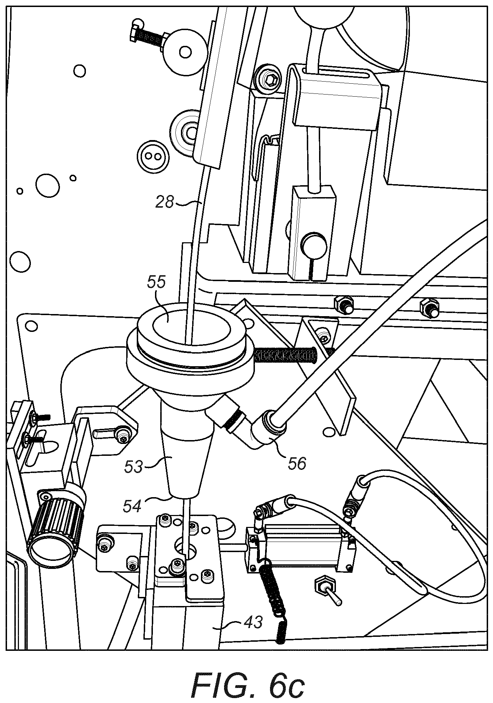

Referring again to Figure 4, as the moulded continuous sleeve 28 exits the steam die 43 it begins to cool and the form of the moulded sleeve 28 is maintained as the material returns to a predominantly elastic condition. As shown in Figure 6c, a cooling unit 53 may be provided immediately after the die 43 to accelerate the rate of cooling and ensure that the moulded form of the sleeve 28 does not deteriorate during subsequent processes due to residual heat which may maintain plastic behaviour in the sleeve 28.

The cooling unit comprises a funnel shaped body with an internal chamber through which the continuous sleeve 28 passes immediately or almost immediately after it leaves the steam die 43. The sleeve 28 enters the funnel shaped chamber via the narrow end 54 and exits via the larger, open end 55 of the funnel. The funnel shaped chamber 53 comprises a high pressure air inlet 56 which provides cool air to the interior of the chamber 53 and directly onto the continuous sleeve 28 to carry heat away from the sleeve and cool it.

Referring again to Figures 3 and 4, the moulded and cooled continuous sleeve 28 then enters the combining process 14 which opens the continuous sleeve 28 by enlarging the opening before the collated filter units 17, 18 are inserted into the sleeve via the enlarged opening. The combining process 14 uses a combining apparatus which includes a cylindrical former 56, a sleeve retaining assembly 57 and the collator 20.

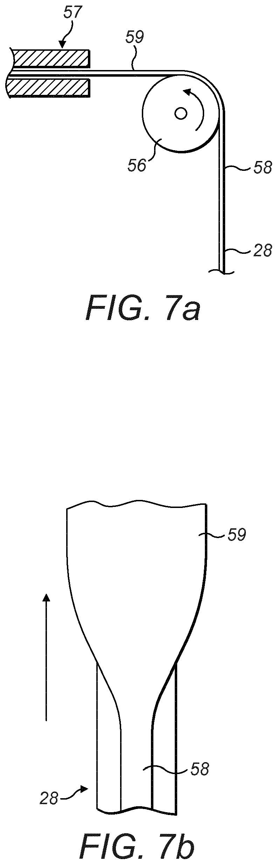

The combining apparatus is shown in more detail in Figures 7a and 7b. The cylindrical former 56 is configured so that the continuous and cooled sleeve 28 travels over and around the cylindrical former 56 along an arcuate path through an angle of, for example at least 30 degrees, or more preferably about 90 degrees, as shown in Figures 4 and 7. The sleeve 28 is received on the cylindrical former 56 with the continuous opening 58 facing outwards, away from the former 56, so that the opening 58 faces radially away from the longitudinal axis of the former 56. The opening 58 is positioned on the opposite side of the sleeve 28 to that which contacts the cylindrical former 56. This can be achieved by orientating the material reel 30 and steam die 43 (see Figure 4) such that the sleeve 28 is formed with the continuous opening in the correct orientation for being received on the cylindrical former 56 in the above described manner, as shown in Figure 7a.

As the continuous sleeve 28 travels around the cylindrical former 56 the sleeve is deformed and folded backwards on itself which causes the opening 58 along the sleeve to be widened so that the sleeve 28 is at least partially flattened into an open position 59, as shown in Figure 7b. The extent to which the continuous opening 58 is enlarged or widened, and therefore the extent to which the sleeve 28 is flattened, will be determined by the radius of the cylindrical former 56, the angle through which the sleeve 28 is turned and the profile of the circumferential face of the former 56. For example, the cylindrical former 56 may be configured to only widen the opening 58 by the minimum amount required to insert the collations filter rods through the opening. Alternatively, the sleeve 28 may be almost completely flattened.

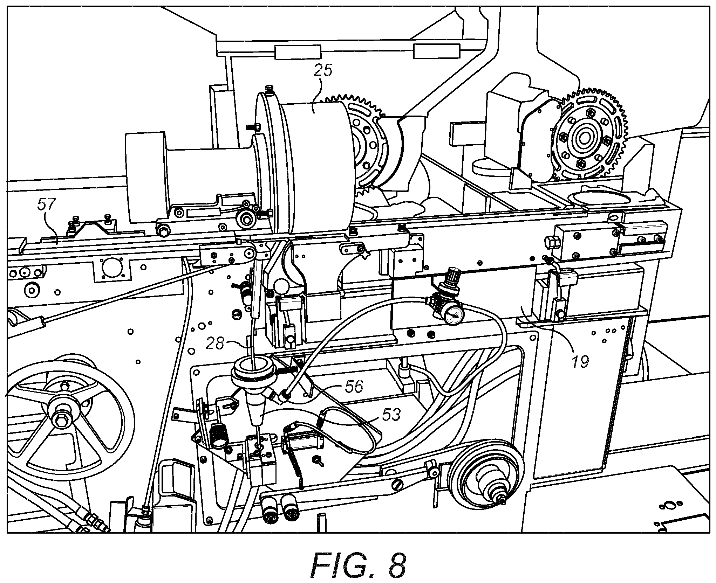

As shown in Figure 8, the collating drum 25 pushes the arranged filter units from the conveyor 19 onto the opened sleeve 59 as it passes over the cylindrical former 56. The collated filter units are thereby inserted into the continuous sleeve through the enlarged opening 58 and the collating drum 25 ensures that the filter units are driven into the sleeve 59 so that there is no space between the filter units.

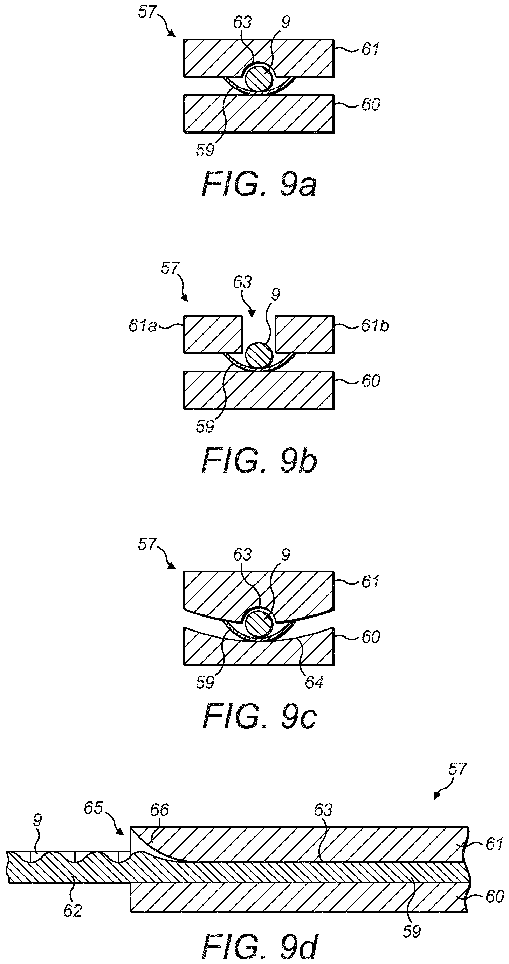

As the opened sleeve 59 leaves the cylindrical former 56 it is no longer travelling in an arcuate path and the resilient and elastic properties of the sleeve material may cause the sleeve 59 to naturally return to the original non-deformed configuration that was defined during the moulding process 23 (see Figure 3). Therefore, to ensure that there is sufficient time for the filter inserts to be properly collated and inserted into the sleeve 59, the opened sleeve may be maintained in the open, deformed position for at least a short distance. In other words, a region of the sleeve is maintained in the deformed configuration as it leaves the cylindrical former 56 to provide enough time and space to insert the collation of filter inserts. Furthermore, it is preferable to control the closing movement of the opened sleeve 59 because the natural movement of the sleeve from the deformed and opened form 59 to the non-deformed form 62 (see Fig. 9c) may be unpredictable and could damage the material of the sleeve and/or dislodge the collated filter units positioned on the opened sleeve 59.

Referring to Figures 4, 9a, 9b, 9c and 9d, the apparatus includes a sleeve retaining assembly 57 that comprises a support plate 60 and a retaining plate 61 to retain the sleeve 59 in the open position after the sleeve exits the cylindrical former 56. This provides some time for the collated filter units 9 to be fed into the opened sleeve 59.

Figures 9a, 9b and 9c show cross sections of different embodiments of the sleeve retaining assembly 57. Each embodiment has a support plate 60 and retaining plate 61 with the opened sleeve 59 and filter inserts 9 located between the two plates 60, 61. The sleeve 59 and filter units 9 are moving through the assembly, between the support plate 60 and retaining plate 61, which combine to prevent the sleeve from returning to the non-deformed, moulded configuration over a short distance while the filter inserts 9 are inserted.

The retaining plate 61 of the embodiment shown in Figure 9a comprises a central longitudinal groove 63 through which the collation of filter units 9 moves and the internal surfaces either side of the groove 63 hold the sleeve 59 in the open position by preventing the edges from moving back into the non-deformed configuration.

The embodiment shown in Figure 9b has a retaining plate 61 that is formed of two individual flat plates 61a, 61b that are separated to provide a space 63 along which the collated filter inserts 9 freely travel on the opened sleeve 59.

The embodiment of Figure 9c has a support plate 60 which comprises an inwardly tapered or concave surface 64 to ensure that the collation of filter units 9 and the opened sleeve 59 are maintained in a central position between the support plate 60 and retaining plate 61.

The sleeve 59 is only held in the open position for the distance required to insert the filter units 9 in the desired manner. Therefore, after a short distance between the support plate 60 and the retaining plate 61, the sleeve 59 is allowed to return to its moulded configuration 62 (see also Figure 4). As shown in Figure 9d, the exit end 65 of the sleeve retaining assembly 57 may have a tapered portion 66 on either side of the groove 63 that gradually allows the edges of the opened sleeve 59 to move upwards and envelop the filter rods 9 to re-form the moulded sleeve 62 with filter rods 9 within. As explained earlier, this more gradual return to the moulded configuration 62 may be preferable to a sudden and instant release which could disturb the arrangement of filter units 9 or could damage the sleeve material.

Referring again to Figure 4, depending on the material of the sleeve, machine running speed and other factors such as the diameter of the cylindrical former 56, the open, flattened sleeve 59 may not return to the non-deformed, moulded configuration due to the elastic properties of the material alone. In this case, a garniture 67 and/or a heater 68 may be provided to re-form the flattened sleeve 59 into the continuous sleeve 62 to envelop the filter units 9. As shown in Figure 4, this optional garniture 67 may be positioned downstream of the sleeve retaining assembly 57.

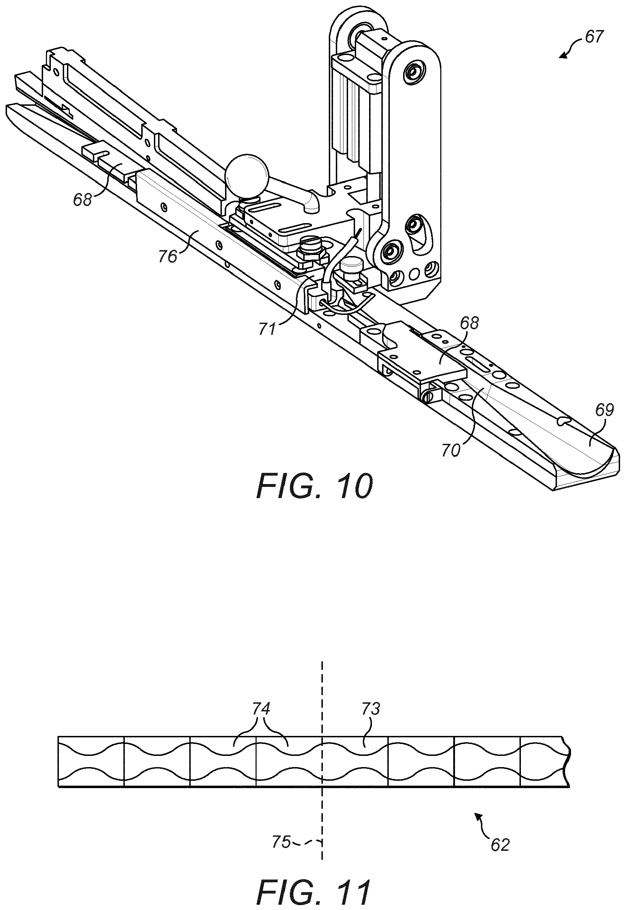

The garniture 67, as shown in Figure 10, has a tapered inlet 69 which leads onto a semitubular groove 70 through which the flattened sleeve 59 enters the garniture 67. The form of the tapered inlet 69 causes the edges of the flattened sleeve 59 to move upwards and garniture plates 71, 76 fold the edges over to re-form the non-deformed moulded sleeve 62 around the filter rods 9. The garniture plates 71, 76 comprise tapered surfaces that push the sleeve into the required shape as the sleeve is drawn through the garniture 67.

Depending on the characteristics of the material being used to form the sleeve, a garniture with a similar configuration to that described may be used to control the natural elastic movement of the sleeve back into the non-deformed configuration. For example, instead of the garniture being configured to push the sleeve material, the garniture plates may be configured to restrict the movement of the sleeve material so that the sleeve pushes against the garniture plates and is gradually released into the non-deformed configuration. This may be used to avoid the sudden release of the sleeve material which may damage the material and/or dislodge the filter units. Furthermore, the garniture 67 may also include one or more heaters 68 to heat the flattened sleeve 59 as it enters the garniture 67 to induce plastic behaviour in the sleeve material to ease the re-forming process.

Referring again to Figure 4, after the sleeve 62 has been reformed around the filter units 9, either by natural elasticity or by a re-forming apparatus, the continuous sleeve 62 enters a cutter 72. As previously explained, the cutter 72 is configured to sever the continuous sleeve 62 and the filter units 9 into the individual products shown in Figure 2. Figure 11 shows the sleeve as it enters the cutter, with dotted lines 75 representing the cutting locations along the sleeve 62. The timing of the cutter 72 is dependent on the timing of the collating drum 25 (see Figure 4) such that the cutter 72 severs the continuous sleeve 62 in locations corresponding to the middle of each double length filter rod 73. In this way, the individual sleeves 1 are separated from the continuous sleeve 62 and the double length inserts 73 are cut into single length inserts 74, which are located at the ends of each sleeve product 1. The cutter 72 may include a rotary blade, guillotine or other cutting mechanism to sever the sleeve 62 and double length filter units 73 quickly and cleanly.

## Claims

1. A method of inserting elongate elements positioned in end-to-end relationship into a continuous resilient flexible sleeve (28) comprising a wall (2) that extends around and partially encloses said elongate elements (9) to hold them in position within the sleeve (1) when inserted therein, the wall (2) having a longitudinally extending opening (4) configured to enable a user to make contact with elongate elements (9) held by said sleeve (1) through said opening (4) to push them along the sleeve (1) towards, and out of, one end of the sleeve (1), **characterised in that** the insertion method comprises: continuously feeding the sleeve (28) over a member that deforms a region of the sleeve (28) to enlarge the opening (58) and simultaneously feeding a continuous length of elongate elements (9) positioned in end-to-end relationship into the sleeve (28) through the enlarged opening (58) in said region.

2. The method of claim 1, wherein said member that deforms a region of the sleeve (28) to enlarge the opening (58) comprises an arcuately-shaped former (56) and the method includes passing the sleeve (28) around a portion of said former (56) so that it follows an arcuate path to thereby cause the opening (58) in the sleeve to widen.

3. The method of claim 2, wherein the method includes passing the sleeve (28) around the former (56) with its opening (58) facing radially away from the longitudinal axis of the former (56) so that the opening (58) in the sleeve (28) is widened.

4. The method of claim 2 or claim 3, further including the step of maintaining the deformation in a region of the sleeve (28) beyond a point at which it stops following an arcuate path around the former (56).

5. The method of claim 4, wherein the step of maintaining deformation in a region of the sleeve (28) comprises passing it between a support plate (60) and a sleeve retaining plate (61) to prevent release of the deformation and return of the region of the sleeve (28) to its original non-deformed configuration.

6. The method of any preceding claim, including the step of feeding the sleeve (28) and the elongate elements (9) contained within the sleeve (28) through a garniture (67), positioned downstream of said member, to close the sleeve (28) around the elongate elements (9).

7. The method of any of any preceding claim, including the step of releasing the sleeve (28) so that it closes around the elongate elements (9) contained within the sleeve (28) due to its own resilience downstream of said member.

8. The method of any preceding claim, comprising the step of applying heat to the sleeve (28) to soften it prior to deformation and/or to facilitate closing of the sleeve (28) around the elongate elements (9).

9. The method of any preceding claim, wherein the feeding of elongate elements (9) includes arranging a continuous length of elongate elements (9) in end-to-end relation so that there are no spaces between said elements (9) and pushing said continuous length into the opened sleeve (28).

10. Apparatus for inserting elongate elements (9) positioned in end-to-end relationship into a continuous resilient flexible sleeve (28) comprising a wall (2) that extends around and partially encloses said elongate elements (9) to hold them in position within the sleeve (1), the wall (2) having a longitudinally extending opening (4) configured to enable a user to make contact with elongate elements (9) held by said sleeve (1) through said opening (4) to push them along the sleeve (1) towards, and out of, one end of the sleeve (1), **characterised in that** the insertion apparatus comprises: a member configured to deform a region of the sleeve as the sleeve is fed over the member, to enlarge the opening (58) as said sleeve passes through said apparatus, and a conveyor (19) to simultaneously feed a continuous length of elongate elements (9) positioned in end-to-end relation into the sleeve (28) through the enlarged opening (58) in said region so that the sleeve (28) closes around the elongate elements (9) when it travels beyond said apparatus.

11. The apparatus of claim 10, wherein the member that deforms a region of the sleeve (28) to enlarge the opening (58) comprises an arcuately-shaped former (56) around at least a portion of which said sleeve (28) is passed so that it follows an arcuate path to thereby cause the opening (58) in the sleeve (28) to widen.

12. The apparatus of claim 11, wherein the arcuately-shaped former (56) is disposed such that the sleeve (28) passes around the former (56) with its opening (58) facing radially away from the longitudinal axis of the former (56) so that the opening (58) in the sleeve (28) is widened.

13. The apparatus of any of claims 10 to 12, further comprising a support plate (60) and a retaining plate (61) positioned such that the sleeve (28) passes between the support plate (60) and the retaining plate (61) as the sleeve (28) leaves said member to maintain the deformation of the sleeve (28) and prevent the region of the sleeve (28) returning to its original non-deformed configuration.

14. The apparatus of any of claims 10 to 13, further comprising a garniture (67) positioned downstream of said apparatus, through which the sleeve (28) and the elongate elements (9) contained within the sleeve (28) are fed to close the sleeve (28) around the elongate elements (9).

15. The apparatus of claim 13 or claim 14, wherein the support plate (60) and retaining plate (61) are configured to release the deformed region of the sleeve (28) so that is closes around the elongate elements (9) contained within the sleeve (28) due to its own resilience.

16. The apparatus of claim 14 or claim 15, further comprising a heater (68) disposed to heat the sleeve (28) to soften it prior to deformation and/or to facilitate closing of the sleeve (28) around the elongate elements (9).

## Patentansprüche

1. Verfahren zum Einsetzen von länglichen Elementen, die in einer End-zu-End-Beziehung positioniert sind, in eine durchgehende elastische, flexible Hülse (28), die eine Wand (2) umfasst, die um die genannten länglichen Elemente (9) herum verläuft und sie teilweise umschließt, um sie in Position innerhalb der Hülse (1) zu halten, wenn sie darin eingesetzt sind, wobei die Wand (2) eine in Längsrichtung verlaufende Öffnung (4) hat, die so konfiguriert ist, dass ein Benutzer mit von der genannten Hülse (1) gehaltenen länglichen Elementen (9) durch die genannte Öffnung (4) in Kontakt kommen kann, um sie entlang der Hülse (1) in Richtung auf ein Ende der Hülse (1) und aus diesem hinaus zu schieben, **dadurch gekennzeichnet, dass** das Einsetzverfahren Folgendes beinhaltet: kontinuierliches Führen der Hülse (28) über ein Teil, das eine Region der Hülse (28) verformt, um die Öffnung (58) zu vergrößern, und gleichzeitiges Führen einer durchgehenden Länge von in einer End-zu-End-Beziehung positionierten länglichen Elementen (9) in die Hülse (28) durch die vergrößerte Öffnung (58) in der genannten Region.

2. Verfahren nach Anspruch 1, wobei das genannte Teil, das eine Region der Hülse (28) verformt, um die Öffnung (58) zu vergrößern, eine bogenförmige Formvorrichtung (56) umfasst und das Verfahren das Leiten der Hülse (28) um einen Abschnitt der genannten Formvorrichtung (56) herum beinhaltet, so dass sie einem bogenförmigen Pfad folgt, um dadurch die Öffnung (58) in der Hülse zu verbreitern.

3. Verfahren nach Anspruch 2, wobei das Verfahren das Leiten der Hülse (28) um die Formvorrichtung (56) herum beinhaltet, wobei ihre Öffnung (58) von der Längsachse der Formvorrichtung (56) radial weg zeigt, so dass die Öffnung (58) in der Hülse (28) verbreitert wird.

4. Verfahren nach Anspruch 2 oder Anspruch 3, das ferner den Schritt des Beibehaltens der Verformung in einer Region der Hülse (28) über einen Punkt hinaus beinhaltet, an dem sie einem bogenförmigen Pfad um die Formvorrichtung (56) herum nicht weiter folgt.

5. Verfahren nach Anspruch 4, wobei der Schritt des Beibehaltens der Verformung in einer Region der Hülse (28) das Leiten derselben zwischen einer Tragplatte (60) und einer Hülsenhalteplatte (61) beinhaltet, um ein Lösen der Verformung und eine Rückkehr der Region der Hülse (28) in ihre ursprüngliche unverformte Konfiguration zu verhindern.

6. Verfahren nach einem vorherigen Anspruch, das den Schritt des Führens der Hülse (28) und der in der Hülse (28) enthaltenen länglichen Elemente (9) durch eine stromabwärts des genannten Teils positionierte Garnitur (67) beinhaltet, um die Hülse (28) um die länglichen Elemente (9) herum zu schließen.

7. Verfahren nach einem vorherigen Anspruch, das den Schritt des Lösens der Hülse (28) beinhaltet, so dass sie sich aufgrund ihrer Eigenelastizität stromabwärts des genannten Teils um die in der Hülse (28) enthaltenen länglichen Elemente (9) herum schließt.

8. Verfahren nach einem vorherigen Anspruch, das den Schritt des Aufbringens von Wärme auf die Hülse (28) beinhaltet, um sie vor dem Verformen zu erweichen und/oder um das Schließen der Hülse (28) um die länglichen Elemente (9) herum zu erleichtern.

9. Verfahren nach einem vorherigen Anspruch, wobei das Führen von länglichen Elementen (9) Folgendes beinhaltet: Anordnen einer durchgehenden Länge von länglichen Elementen (9) in einer End-zu-End-Beziehung, so dass es keine Lücken zwischen den genannten Elementen (9) gibt, und Schieben der genannten durchgehenden Länge in die geöffnete Hülse (28).

10. Vorrichtung zum Einsetzen von länglichen Elementen (9), die in einer End-zu-End-Beziehung positioniert sind, in eine durchgehende elastische, flexible Hülse (28), die eine Wand (2) umfasst, die um die genannten länglichen Elemente (9) herum verläuft und sie teilweise umschließt, um sie in Position innerhalb der Hülse (1) zu halten, wobei die Wand (2) eine in Längsrichtung verlaufende Öffnung (4) hat, die so konfiguriert ist, dass ein Benutzer mit von der genannten Hülse (1) gehaltenen länglichen Elementen (9) durch die genannte Öffnung (4) in Kontakt kommen kann, um sie entlang der Hülse (1) in Richtung auf ein Ende der Hülse (1) und aus diesem hinaus zu schieben, **dadurch gekennzeichnet, dass** die Einsetzvorrichtung Folgendes umfasst: ein Teil, das so konfiguriert ist, dass es eine Region der Hülse verformt, während die Hülse über das Teil geführt wird, um die Öffnung (58) zu vergrößern, während die genannte Hülse durch die genannte Vorrichtung läuft, und einen Förderer (19) zum gleichzeitigen Führen einer durchgehenden Länge von länglichen Elementen (9), die in einer End-zu-End-Beziehung positioniert sind, in die Hülse (28) durch die vergrößerte Öffnung (58) in der genannten Region, so dass sich die Hülse (28) um die länglichen Elemente (9) schließt, wenn sie sich über die genannte Vorrichtung hinaus bewegt.

11. Vorrichtung nach Anspruch 10, wobei das Teil, das eine Region der Hülse (28) verformt, um die Öffnung (58) zu vergrößern, eine bogenförmige Formvorrichtung (56) umfasst, um wenigstens einen Abschnitt von der die genannte Hülse (28) geleitet wird, so dass sie einem bogenförmigen Pfad folgt, um dadurch die Öffnung (58) in der Hülse (28) zu verbreitern.

12. Vorrichtung nach Anspruch 11, wobei die bogenförmige Formvorrichtung (56) so angeordnet ist, dass die Hülse (28) um die Formvorrichtung (56) herum läuft, wobei die Öffnung (58) von der Längsachse der Formvorrichtung (56) radial weg zeigt, so dass die Öffnung (58) in der Hülse (28) verbreitert wird.

13. Vorrichtung nach einem der Ansprüche 10 bis 12, die ferner eine Tragplatte (60) und eine Halteplatte (61) umfasst, die so positioniert sind, dass die Hülse (28) zwischen der Tragplatte (60) und der Halteplatte (61) passiert, während die Hülse (28) das genannte Teil verlässt, um die Verformung der Hülse (28) beizubehalten und um eine Rückkehr der Region der Hülse (28) in ihre ursprüngliche unverformte Konfiguration zu verhindern.

14. Vorrichtung nach einem der Ansprüche 10 bis 13, die ferner eine stromabwärts der genannten Vorrichtung positionierte Garnitur (67) umfasst, durch die die Hülse (28) und die in der Hülse (28) enthaltenen länglichen Elemente (9) geführt werden, um die Hülse (28) um die länglichen Elemente (9) herum zu schließen.

15. Vorrichtung nach Anspruch 13 oder Anspruch 14, wobei die Tragplatte (60) und die Halteplatte (61) so konfiguriert sind, dass die verformte Region der Hülse (28) gelöst wird, so dass sie sich aufgrund ihrer Eigenelastizität um die in der Hülse (28) enthaltenen länglichen Elemente (9) schließt.

16. Vorrichtung nach Anspruch 14 oder Anspruch 15, die ferner ein Heizgerät (68) umfasst, das zum Erwärmen der Hülse (28) vorgesehen ist, um sie vor dem Verformen zu erweichen und/oder um das Schließen der Hülse (28) um die länglichen Elemente (9) herum zu erleichtern.

## Revendications

1. Procédé d'insertion d'éléments allongés positionnés dans une relation de bout en bout dans un manchon souple élastique continu (28) comprenant une paroi (2) qui s'étend autour et entoure partiellement lesdits éléments allongés (9) pour les maintenir en position à l'intérieur du manchon (1) lorsqu'ils sont insérés dans celui-ci, la paroi (2) ayant une ouverture s'étendant longitudinalement (4) configurée pour permettre à un utilisateur d'entrer en contact avec les éléments allongés (9) maintenus par ledit manchon (1) à travers ladite ouverture (4) afin de les pousser le long du manchon (1) vers et hors d'une extrémité du manchon (1), **caractérisé en ce que** le procédé d'insertion comprend : l'introduction continue du manchon (28) par-dessus un élément qui déforme une région du manchon (28) pour agrandir l'ouverture (58) et l'introduction simultanée d'une longueur continue d'éléments allongés (9) positionnés dans une relation de bout en bout dans le manchon (28) à travers l'ouverture agrandie (58) dans ladite région.

2. Procédé selon la revendication 1, dans lequel ledit élément qui déforme une région du manchon (28) pour agrandir l'ouverture (58) comprend un gabarit de forme arquée (56) et le procédé inclut le passage du manchon (28) autour d'une partie dudit gabarit (56) de sorte qu'il suit un trajet arqué pour ainsi amener l'ouverture (58) à s'élargir dans le manchon.

3. Procédé selon la revendication 2, dans lequel le procédé inclut le passage du manchon (28) autour du gabarit (56) avec son ouverture (58) dirigée radialement à l'opposé de l'axe longitudinal du gabarit (56) de sorte que l'ouverture (58) dans le manchon (28) est élargie.

4. Procédé selon la revendication 2 ou la revendication 3, incluant en outre l'étape de maintien de la déformation dans une région du manchon (28) au-delà d'un point au niveau duquel il s'arrête de suivre un trajet arqué autour du gabarit (56).

5. Procédé selon la revendication 4, dans lequel l'étape de maintien de la déformation dans une région du manchon (28) comprend son passage entre une plaque de support (60) et une plaque de retenue de manchon (61) pour empêcher le relâchement de la déformation et le retour de la région du manchon (28) dans sa configuration d'origine non déformée.

6. Procédé selon une quelconque revendication précédente, incluant l'étape d'introduction du manchon (28) et des éléments allongés (9) contenus à l'intérieur du manchon (28) à travers une garniture (67), positionnée en aval dudit élément, pour fermer le manchon (28) autour des éléments allongés (9).

7. Procédé selon une quelconque revendication précédente, incluant l'étape de relâchement du manchon (28) de sorte qu'il se ferme autour des éléments allongés (9) contenus à l'intérieur du manchon (28) en raison de sa propre élasticité en aval dudit élément.

8. Procédé selon une quelconque revendication précédente, comprenant l'étape d'application de chaleur au manchon (28) pour le ramollir avant la déformation et/ou pour faciliter la fermeture du manchon (28) autour des éléments allongés (9).

9. Procédé selon une quelconque revendication précédente, dans lequel l'introduction des éléments allongés (9) inclut l'agencement d'une longueur continue des éléments allongés (9) dans une relation de bout en bout de sorte qu'il n'y a aucun espace entre lesdits éléments (9) et la poussée de ladite longueur continue dans le manchon ouvert (28).

10. Appareil pour l'insertion d'éléments allongés (9) positionnés dans une relation de bout en bout dans un manchon souple élastique continu (28) comprenant une paroi (2) qui s'étend autour et entoure partiellement lesdits éléments allongés (9) pour les maintenir en position à l'intérieur du manchon (1), la paroi (2) ayant une ouverture s'étendant longitudinalement (4) configurée pour permettre à un utilisateur d'entrer en contact avec les éléments allongés (9) maintenus par ledit manchon (1) à travers ladite ouverture (4) afin de les pousser le long du manchon (1) vers et hors d'une extrémité du manchon (1), **caractérisé en ce que** l'appareil d'insertion comprend : un élément configuré pour déformer une région du manchon lorsque le manchon est introduit par-dessus l'élément, afin d'agrandir l'ouverture (58) lorsque ledit manchon passe à travers ledit appareil, et un transporteur (19) pour introduire simultanément une longueur continue des éléments allongés (9) positionnés dans une relation de bout en bout dans le manchon (28) à travers l'ouverture agrandie (58) dans ladite région de sorte que le manchon (28) se ferme autour des éléments allongés (9) lorsqu'il se déplace au-delà dudit appareil.

11. Appareil selon la revendication 10, dans lequel l'élément qui déforme une région du manchon (28) pour agrandir l'ouverture (58) comprend un gabarit de forme arquée (56) autour d'au moins une partie dans laquelle ledit manchon (28) est passé de sorte qu'il suit un trajet arqué pour ainsi amener l'ouverture (58) à s'élargir dans le manchon (28).

12. Appareil selon la revendication 11, dans lequel le gabarit de forme arquée (56) est disposé de sorte que le manchon (28) passe autour du gabarit (56) avec son ouverture (58) dirigée radialement à l'opposé de l'axe longitudinal du gabarit (56) de sorte que l'ouverture (58) du manchon (28) est élargie.

13. Appareil selon l'une quelconque des revendications 10 à 12, comprenant en outre une plaque de support (60) et une plaque de retenue (61) positionnées de sorte que le manchon (28) passe entre la plaque de support (60) et la plaque de retenue (61) lorsque le manchon (28) quitte ledit élément pour maintenir la déformation du manchon (28) et empêcher le retour de la région du manchon (28) dans sa configuration d'origine non déformée.

14. Appareil selon l'une quelconque des revendications 10 à 13, comprenant en outre une garniture (67) positionnée en aval dudit appareil, à travers laquelle le manchon (28) et les éléments allongés (9) contenus à l'intérieur du manchon (28) sont introduits pour fermer le manchon (28) autour des éléments allongés (9).

15. Appareil selon la revendication 13 ou la revendication 14, dans lequel la plaque de support (60) et la plaque de retenue (61) sont configurées pour relâcher la région déformée du manchon (28) de sorte qu'il se ferme autour des éléments allongés (9) contenus à l'intérieur du manchon (28) en raison de sa propre élasticité.

16. Appareil selon la revendication 14 ou la revendication 15, comprenant en outre un dispositif de chauffage (68) disposé pour chauffer le manchon (28) afin de le ramollir avant la déformation et/ou pour faciliter la fermeture du manchon (28) autour des éléments allongés (9).
